# EUROPÄISCHE PATENTSCHRIFT

(11) **EP 4 448 347 B1**
(45) Veröffentlichungstag und Bekanntmachung des Hinweises auf die Patenterteilung: **16.04.2025**
(21) Anmeldenummer: 23704766.7
(22) Anmeldetag: 09.02.2023
(51) Int. Cl.: B60K 17/02, F16H 48/22, F16H 48/32, B60T 1/06, B60K 23/04, B60K 1/00

(54) **ANTRIEBSVORRICHTUNG FÜR EINE FAHRZEUGACHSE**
DRIVE UNIT FOR A VEHICLE AXLE
DISPOSITIF D'ENTRAÎNEMENT POUR UN ESSIEU DE VÉHICULE

(30) Priorität: 17.02.2022 DE 102022103839
(43) Veröffentlichungstag der Anmeldung: 23.10.2024
(73) Patentinhaber: AUDI AG, 85057 Ingolstadt (DE)
(72) Erfinder: REHR, Alfred, 85120 Hepberg (DE); SCHOLLE, Tassilo, 85080 Gaimersheim (DE); KÜRTEN-PACHOWSKY, Björn, 85072 Eichstätt (DE); HENNING, Kay-Uwe, 85221 Dachau (DE)
(74) Vertreter: Bierschneider, Walter
(86) Internationale Anmeldenummer: PCT/EP2023/053235
(87) Internationale Veröffentlichungsnummer: WO 2023/156291

(56) Entgegenhaltungen:
- DE-A1- 102011 108 567
- DE-A1- 102011 114 322
- US-A1- 2010 240 485

## Beschreibung

Die Erfindung betrifft eine Antriebsvorrichtung für eine Fahrzeugachse eines zweispurigen Fahrzeugs nach dem Oberbegriff des Anspruches 1.

Zur Steigerung der Effizienz und der Reichweite werden Bremsungen eines elektrifizierten Fahrzeugs durch einen Elektroantrieb im Generatorbetrieb (nachfolgend Rekuperationsbetriebsart genannt) durchgeführt, sofern gewisse Randbedingungen erfüllt sind.

Eine gattungsgemäße Antriebsvorrichtung für eine Fahrzeugachse weist ein Achsdifferential auf, mittels dem eine 50/50-Verteilung durchführbar ist. Dessen Eingangsseite ist trieblich mit einer Elektromaschine verbunden, während dessen Ausgangsseiten auf, zu den beiden Fahrzeugrädern führenden Flanschwellen abtreiben.

Im obigen Stand der Technik können in der Rekuperationsbetriebsart an den Fahrzeugrädern nicht unterschiedliche Bremsmomente eingestellt werden. Somit ist eine Bremsmomentenumverteilung während der Rekuperationsbetriebsart nicht verfügbar. Aus Sicherheitsgründen wird der Rekuperationsbereich eingeschränkt. Wird dieser Bereich verlassen, so wird die Rekuperation deaktiviert und das herkömmliche Fahrzeugbremssystem übernimmt. Entsprechend wird im Stand der Technik eine Fahrdynamikregelung mittels eines herkömmlichen Fahrzeugbremssystems durchgeführt, bei dem eine Steuereinheit die Fahrzeugradbremsen der Fahrzeugräder gezielt mit unterschiedlichen Bremsmomenten ansteuert, um das Fahrverhalten zu beeinflussen.

Während der Durchführung der Bremsmomentenumverteilung erfolgt daher keine Rekuperation. Entsprechend ist die Rekuperationsleistung und damit der Verbrauch beziehungsweise die E-Reichweite aufgrund von Fahrsicherheitsaspekten begrenzt.

Insbesondere bei sportlichen Fahrzeugen findet man meist an der Fahrzeug-Hinterachse ein Torque-Vectoring-System. Dieses leitet Antriebsmoment am Differential vorbei direkt an die Fahrzeugräder. Dadurch lassen sich auf der jeweiligen Fahrzeugachse die Antriebsmomente frei verteilen. Ein solches Torque-Vectoring-System weist neben dem gewöhnlichen Antrieb mit Differential zusätzlich noch zwei Überlagerungsgetriebe, zwei kraftschlüssig geregelte Kupplungen, zwei Aktuatoren, eine Steuereinheit und gewöhnlich ein eigenes Hydrauliksystem auf.

Aus der DE 10 2009 013 293 A1 ist ein Differentialgetriebe mit Torque-Vectoring-Funktionalität bekannt. Aus der DE 10 2015 112 924 A1 ist eine Vorrichtung zur Steuerung eines Differentials mit Durchrutschbeschränkung bekannt. Aus der DE 10 2018 133 223 A1 ist eine Fahrzeugachse mit elektrischen Antriebsmotoren bekannt. Aus der US 2010240485A1 ist ein Differentialgetriebe mit Torque-Vectoring-Funktion und innenliegenden Lamellenbremsen bekannt.

Die Aufgabe der Erfindung besteht darin, eine Antriebsvorrichtung für eine Fahrzeugachse eines zweispurigen Fahrzeugs bereitzustellen, bei dem im Vergleich zum Stand der Technik die Rekuperationsleistung während des Fahrbetriebs erhöht ist.

Die Aufgabe ist durch die Merkmale des Anspruches 1 gelöst. Bevorzugte Weiterbildungen der Erfindung sind in den Unteransprüchen offenbart.

Die Erfindung geht von einer Antriebsvorrichtung für eine Fahrzeugachse eines zweispurigen Fahrzeugs aus, das ein Achsdifferential aufweist. Dessen Eingangsseite ist trieblich mit einer Elektromaschine verbunden, während dessen Ausgangsseiten auf, zu den beiden Fahrzeugrädern führenden Flanschwellen abtreiben. Die Fahrzeugachse weist je Fahrzeugrad jeweils ein Überlagerungsgetriebe mit Lamellenkupplung auf. Mit Hilfe des Überlagerungsgetriebes ist die Elektromaschine unter Überbrückung des Achsdifferentials direkt mit der Fahrzeugrad-Flanschwelle verbindbar. Die gattungsgemäße Elektromaschine kann bei einer Fahrzeugbeschleunigung in einer Motorbetriebsart und bei einer Fahrzeugverzögerung in einer Rekuperatonsbetriebsart betrieben werden.

Bei der Erfindung ist während der Rekuperationsbetriebsart eine Bremsmomentenumverteilung zwischen den beiden Fahrzeugrädern durchführbar. Bei der Bremsmomentenumverteilung ist durch Ansteuerung der jeweiligen Lamellenkupplung ein zwischen dem Fahrzeugrad und der Elektromaschine verlaufender Bremsmomentpfad aufteilbar, und zwar in einen Differential-Bremsmomentpfad, der ein Differential-Bremsmoment vom Fahrzeugrad über das Achsdifferential zur Elektromaschine führt, und in einen Überlagerungs-Bremsmomentpfad, der ein Überlagerungs-Bremsmoment vom Fahrzeugrad vorbei am Achsdifferential über das Überlagerungsgetriebe zur Elektromaschine führt. Auf diese Weise sind in der Rekuperationsbetriebsart die Fahrzeugräder mit unterschiedlich großen Bremsmomenten beaufschlagbar, so dass die Fahrzeugräder unterschiedlich stark bremsen können.

Bei einer Ausführung der Fahrzeugachse ohne Fahrzeugradbremsen ist es erforderlich, dass die Rekuperation immer und ausreichend funktioniert. Das heißt, dass auch bei vollständig geladener Batterie eine Vollbremsung oder eine Berg-Abfahrt sicher gewährleistet sein muss. Die Bremsfunktion unterliegt einer hohen Sicherheitseinstufung. Nach diesen Anforderungen muss der Antrieb entwickelt werden.

Vor diesem Hintergrund ist gemäß dem kennzeichnenden Teil des Anspruches 1 an jeder Fahrzeugseite der Lamellenkupplung jeweils eine als Fahrzeugradbremse wirkende Lamellenbremse zugeordnet. Mittels der Lamellenbremse können alternativ oder zusätzlich zur Lamellenkupplung Fahrzeugbremsungen durchgeführt werden. Wenn daher die Elektromaschine nicht oder nur teilweise in der Lage ist zu rekuperieren, dann kann die Lamellenbremse die Bremsaufgabe zumindest teilweise oder vollständig übernehmen.

Die Bremswirkung der Lamellenkupplung ist abhängig vom aktuellen Betriebszustand der Elektromaschine. Die Lamellenbremse kann zum Beispiel in Abhängigkeit des aktuellen Rekuperationsvermögens eine Bremsung bewirken.

In einer steuerungstechnisch einfach realisierbaren sowie bauteilreduzierten Ausführungsvariante kann an jeder Fahrzeugseite sowohl die Lamellenkupplung als auch die Lamellenbremse über einen gemeinsamen Hydraulikzylinder betätigt werden. Der gemeinsame Hydraulikzylinder ist wiederum über genau eine Hydraulikleitung mit der Steuereinheit verbunden. Sofern die Steuereinheit den Hydraulikzylinder mit einem Bremsdruck ansteuert, baut sich im Hydraulikzylinder ein Hydraulikdruck auf, mit dem ein Ringkolben sowohl gegen ein Lamellenpaket der Lamellenkupplung als auch gegen ein Lamellenpaket der Lamellenbremse drückt.

Der Ringkolben drückt dabei ausgehend vom unbetätigten Zustand das Lamellenpaket der Lamellenkupplung über ein Lamellenkupplungs-Lüftspiel bis Erreichen des Kisspoints gegen einen Axialanschlag. Das Lamellenkupplungs-Lüftspiel ist dabei bevorzugt unabhängig vom aktuellen Bremsfall, das heißt bei einer an jeder Fahrzeugseite gleichmäßigen oder ungleichmäßigen Bremsung, unveränderlich.

In gleicher Weise drückt der Ringkolben ausgehend vom unbetätigten Zustand das Lamellenpaket der Lamellenbremse über ein Lamellenbremsen-Lüftspiel bis Erreichen des Kisspoints gegen einen Axialanschlag. Im Gegensatz zur Lamellenkupplung kann das Lamellenbremsen-Lüftspiel in Abhängigkeit vom aktuellen Bremsfall variiert werden. Die Variierung des Lamellenbremsen-Lüftspiels erfolgt in konstruktiv einfacher Weise bevorzugt durch axiale Verstellung des Lamellenbremsen-Anschlags.

Bei einer gleichmäßigen Bremsung auf beiden Fahrzeugseiten ist es aus Sicherheitsgründen bevorzugt, wenn der Bremseingriff primär von der Lamellenbremse übernommen wird. Demgegenüber ist es bei einer ungleichmäßigen Bremsung auf beiden Fahrzeugseiten bevorzugt, wenn die Lamellenkupplung primär den Bremseingriff übernimmt, um eine Rekuperation zu ermöglichen. Vor diesem Hintergrund ist das Lamellenbremsen-Lüftspiel wie folgt variierbar: bei gleichmäßiger Bremsung auf beiden Fahrzeugseiten kann das Lamellenbremsen-Lüftspiel kleiner bemessen sein als das Lamellenkupplungs-Lüftspiel. Dadurch kommt beim Schließhub des Ringkolbens zunächst die Lamellenbremse in Bremseingriff und erst im weiteren Verlauf die Lamellenkupplung in Bremseingriff.

Demgegenüber ist bei einer ungleichmäßigen Bremsung auf beiden Fahrzeugseiten das Lamellenbremsen-Lüftspiel größer bemessen als das Lamellenkupplungs-Lüftspiel. Dadurch kommt beim Schließhub des Ringkolbens zunächst die Lamellenkupplung der von der Steuereinheit mit größerem Bremsdruck angesteuerten Fahrzeugseite in Bremseingriff. Erst im weiteren Verlauf kommt auch die Lamellenbremse in Bremseingriff.

Das Lamellenbremsen-Lüftspiel bzw. die Bremsenkennlinie der Lamellenbremse kann bevorzugt wie folgt variiert werden: So kann der axial verstellbare Anschlag der Lamellenbremse als ein Druckstab ausgeführt sein. Der Druckstab wirkt auf beiden Fahrzeugseiten als axial verstellbarer Axialanschlag. Hierzu ist der Druckstab zwischen Bewegungsanschlägen um einen Druckstab-Axialweg axial verstellbar.

Bei Anwendung des Druckstabes ergibt sich bei einer ungleichmäßigen Bremsung die folgende Konstellation: An der mit größerem Bremsdruck beaufschlagten Fahrzeugseite wird beim Schließhub des Ringkolbens das Lamellenpaket der Lamellenbremse und entsprechend auch der Druckstab um den Druckstab-Axialweg in Richtung anderer Fahrzeugseite verstellt. Auf der mit größerem Bremsdruck beaufschlagten Fahrzeugseite erhöht sich daher das verfügbare Lamellenbremsen-Lüftspiel um den Druckstab-Axialweg, und zwar im Vergleich zum Bremsfall mit gleichmäßiger Bremsung. Bevorzugt ist dabei das Lamellenbremsen-Lüftspiel um ein Zusatzmaß größer bemessen als das Lamellenkupplungs-Lüftspiel. Dadurch ist gewährleistet, dass im Bremsvorgang zunächst die Lamellenkupplung in Bremseingriff kommt und erst dann im weiteren Verlauf die Lamellenbremse in Bremseingriff kommt.

An der Gegendruck-Fahrzeugseite, die der mit größerem Bremsdruck beaufschlagten Fahrzeugseite gegenüberliegt, ergibt sich bei ungleichmäßiger Bremsung die folgende Konstellation: Das Lamellenbremsen-Lüftspiel wird aufgrund der Druckstab-Verstellung reduziert. Bevorzugt ist das reduzierte Lamellenbremsen-Lüftspiel derart kleiner als das Lamellenkupplungs-Lüftspiel bemessen, das eine Betätigung der Lamellenkupplung an der Gegendruck-Fahrzeugseite ausgeschlossen ist.

Die Fahrzeugachse kann zudem an jeder Fahrzeugseite eine Trennkupplung aufweisen. Bei geöffneter Trennkupplung kann das Fahrzeugrad der einen Fahrzeugseite frei drehen. Dessen Drehzahl korreliert mit der aktuellen Fahrzeuggeschwindigkeit, die einen Referenzwert bildet, auf dessen Grundlage eine Steuereinheit eine Fahrdynamik-Regelfunktion, etwa eine ABS-Funktion, durchführt. Mit der Erfindung kann während der Durchführung der Fahrdynamik-Regelfunktion die Rekuperationsbetriebsart aufrechterhalten werden, sodass auch während der Durchführung der Fahrdynamik-Regelfunktion Rekuperationsenergie gewinnbar ist.

In einer technischen Umsetzung kann während der Durchführung der Fahrdynamik-Regelfunktion (das heißt während der Erfassung der Drehzahl des freidrehenden Fahrzeugrads) das an der anderen Fahrzeugseite befindliche Fahrzeugrad ein Bremsmoment über das Überlagerungsgetriebe zur Elektromaschine übertragen. Dadurch ist die Fahrdynamik-Regelfunktion gleichzeitig mit der Rekuperationsbetriebsart durchführbar.

Die Trennkupplung kann die Flanschwelle jeder Fahrzeugseite aufteilen in eine differentialseitige Teilwelle und in eine radseitige Teilwelle. Das Überlagerungsgetriebe ist bevorzugt von der differentialseitigen Teilwelle komplett entkoppelt, jedoch über die Lamellenkupplung mit der radseitigen Teilwelle koppelbar. Bei geöffneter Trennkupplung ist somit das Achsdifferential lastfrei geschaltet, wodurch der Differenzial-Bremsmomentpfad unterbrochen ist und eine Bremsmomentübertragung vom Fahrzeugrad nur noch über das Überlagerungsgetriebe zur Elektromaschine ermöglicht ist.

Konstruktiv einfach ist es, wenn die Trennkupplung als eine Klauenkupplung mit Schiebemuffe realisiert ist. Diese kann zwischen einer Offenstellung und einer Geschlossenstellung axial verstellbar sein. In der Geschlossenstellung kann eine Schiebemuffen-Innenverzahnung mit Außenverzahnungen von sowohl der differentialseitigen Teilwelle als auch der radseitigen Teilwelle in Zahneingriff sein. Demgegenüber ist in der Offenstellung der Zahneingriff gelöst, sodass keine Drehmomentübertragung möglich ist. Der Schiebemuffe kann eine Feder zugeordnet sein, mittels der die Schiebemuffe mit einer Federvorspannkraft in Richtung Geschlossenstellung vorspannbar ist.

Im Hinblick auf eine steuerungstechnisch einfache sowie bauteilreduzierte Ansteuerung sind die Lamellenkupplung, die Lamellenbremse und die Trennkupplung an jeder Fahrzeugseite mit einer gemeinsamen Hydraulikleitung von der Steuereinheit ansteuerbar. Dabei kann bevorzugt der die Lamellenkupplung und die Lamellenbremse betätigende Hydraulikzylinder zusätzlich auch die Trennkupplung betätigen.

Im normalen Betrieb, das heißt kein ABS-Eingriff, sind die beiden Klauenkupplungen der Fahrzeugachse geschlossen. Bei einer Bremsmomenten-übertragung über die jeweils geschlossene Klauenkupplung befinden sich einander zugewandte Zahnflanken der Schiebemuffen-Innenverzahnung und der Außenverzahnung der differentialseitigen Teilwelle in Druckanlage. Zur Sicherung der Geschlossenstellung ist es bevorzugt, wenn die Zahnflanken schräggestellte Hinterlegungen aufweisen. Mit Hilfe der Hinterlegungen baut sich unter Bremsmomentwirkung eine Axialkraftkomponente auf, die die Schiebemuffe in Richtung Geschlossenstellung drückt. Die Größe der auf die Schiebemuffe wirkenden Axialkraftkomponente korreliert dabei mit der Größe des über die Trennkupplung fließenden Bremsmoments. Das heißt, dass bei kleiner werdendem Bremsmoment sich auch die Axialkraftkomponente reduziert, während bei größer werdendem Bremsmoment sich die Axialkraftkomponente ebenfalls vergrößert.

Nachfolgend wird eine während der Rekuperationsbetriebsart eintretende Betriebssituation betrachtet, bei der an einer nicht aktuierten Fahrzeugseite die Lamellenkupplung geöffnet ist, und an der anderen, aktuierten Fahrzeugseite die Lamellenkupplung aktuiert ist. In diesem Fall fließt verstärkt an der aktuierten Fahrzeugseite Bremsmoment vom Fahrzeugrad zur Elektromaschine, während an der nicht aktuierten Fahrzeugseite nur ein reduziertes Bremsmoment vom Fahrzeugrad zur Elektromaschine fließt. Von daher besteht Gefahr, dass auf der nicht aktuierten Fahrzeugseite das Fahrzeugrad blockiert, sofern das über die geschlossene Klauenkupplung fließende reduzierte Bremsmoment einen Bremsmoment-Grenzwert unterschreitet. In diesem Fall ist eine Fahrdynamik-Regelfunktion, etwa ABS-Funktion, zu aktivieren, bei der aus Sicherheitsgründen eine der Klauenkupplungen geöffnet wird. Auf diese Weise wird das Achsdifferential lastfrei geschaltet. Dadurch kann das Fahrzeugrad auf der nicht aktuierten Fahrzeugseite frei drehen, dessen Drehzahl mit der aktuellen Fahrzeuggeschwindigkeit korreliert, die einen Referenzwert bildet, auf dessen Grundlage die Steuereinheit die Fahrdynamik-Regelfunktion (ABS-Funktion) durchführt.

Die im ABS-Fall erfolgende Öffnung der Klauenkupplung kann steuerungstechnisch einfach sowie selbsttätig wie folgt durchgeführt werden: Demnach sind die auf die Schiebemuffe wirkenden Kräfte, das heißt Federvorspannkraft, Aktuatorkraft und Axialkraftkomponente, so ausgelegt, dass eine resultierende Kraft die Schiebemuffe in die Offenstellung verstellt, sofern die Axialkraftkomponente aufgrund kleiner werdendem Bremsmoment eine, mit dem Bremsmoment-Grenzwert korrelierenden Axialkraft-Grenzwert unterschreitet.

Mit der Erfindung können an der Fahrzeugachse herkömmliche, hydraulisch betreibbare Fahrzeugradbremsen weggelassen werden. In diesem Fall können Bremsungen der Fahrzeugräder alleine durch Ansteuerung der beiden Lamellenkupplungen durchgeführt werden.

Bevorzugt kann jedes der beiden Überlagerungsgetriebe jeweils ein auf der Flanschwelle drehbar gelagertes Loszahnrad aufweisen. Das Loszahnrad kann mit der Elektromaschine trieblich verbunden sein. Zudem kann das Loszahnrad über die Lamellenkupplung mit der Flanschwelle gekoppelt werden. Die Übersetzung zwischen der Elektromaschine und dem Loszahnrad kann bevorzugt etwas kürzer ausgelegt sein als die Übersetzung zwischen der Elektromaschine und der Differential-Eingangsseite. Auf diese Weise wird erreicht, dass das Loszahnrad etwas langsamer dreht als die Flanschwelle. Dadurch ist ein Bremsmomentfluss von der Flanschwelle über die Lamellenkupplung in Richtung auf die Elektromaschine gewährleistet.

Zudem kann das eingangsseitige Achsdifferential-Zahnrad mit einem auf einer Zwischenwelle angeordneten Festzahnrad kämmen. In diesem Fall kann das Überlagerungsgetriebe ein auf der Zwischenwelle angeordnetes Festzahnrad aufweisen, das mit dem Loszahnrad kämmt.

Bei der oben skizzierten Getriebestruktur kann die Lamellenkupplung an einer Fahrzeugseite aktuiert werden. In diesem Fall kann eine Bremsmomentverzweigung erfolgen, bei der das von dem Fahrzeugrad kommende Bremsmoment aufgeteilt wird, und zwar in das reduzierte Differential-Bremsmoment und in das Überlagerungs-Bremsmoment. Im weiteren Momentenverlauf in Richtung Elektromaschine wird am Zwischenwellen-Festzahnrad das Überlagerungs-Bremsmoment in die Zwischenwelle eingeleitet. Die Zwischenwelle wirkt daher als eine Summierwelle, in der das Überlagerungs-Bremsmoment und das Differential-Bremsmoment aufaddiert werden. Demgegenüber nimmt an der nicht aktuierten Fahrzeugseite das Fahrzeugrad über das Achsdifferential das Differential-Bremsmoment der aktuierten Fahrzeugseite an, das über das Achsdifferential zur Zwischenwelle geleitet wird und dort aufaddiert wird.

Die Lamellenkupplungen der beiden Überlagerungsgetriebe können bevorzugt in einer Fahrdynamikregelung eingebunden sein. In diesem Fall kann während der Rekuperationsbetriebsart eine Steuereinheit in Abhängigkeit von aktuellen Fahrbetriebsparametern eine oder beide der Lamellenkupplungen ansteuern, um das Fahrverhalten durch Bremsmomentenumverteilung zu unterstützen.

Nachfolgend ist ein Ausführungsbeispiel der Erfindung anhand der beigefügten Figuren beschrieben. Es zeigen:
- Fig. 1 bis 4: jeweils Ansichten eines ersten nicht von der Erfindung umfassten Vergleichsbeispiels einer Antriebsvorrichtung für eine Fahrzeugachse;
- Fig. 5 bis 9: jeweils Ansichten eines zweiten nicht von der Erfindung umfassten Vergleichsbeispiels;
- Fig. 10: in einer Ansicht entsprechend der Fig. 6 ein Ausführungsbeispiel der Erfindung;
- Fig. 11: Bremsenkennlinien der Lamellenkupplung sowie der Lamellenbremse an beiden Fahrzeugseiten bei gleichmäßiger Bremsung; und
- Fig. 12: Bremsenkennlinien der Lamellenkupplung und der Lamellenbremse an beiden Fahrzeugseiten bei ungleichmäßiger Bremsung.

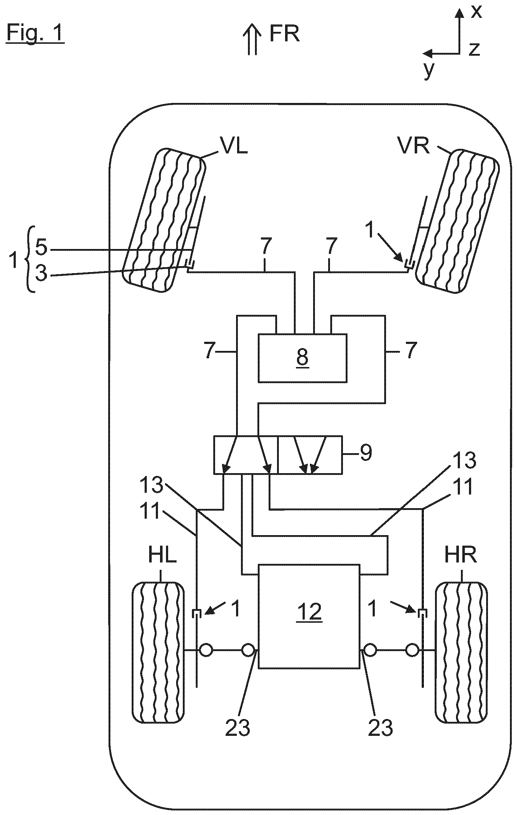

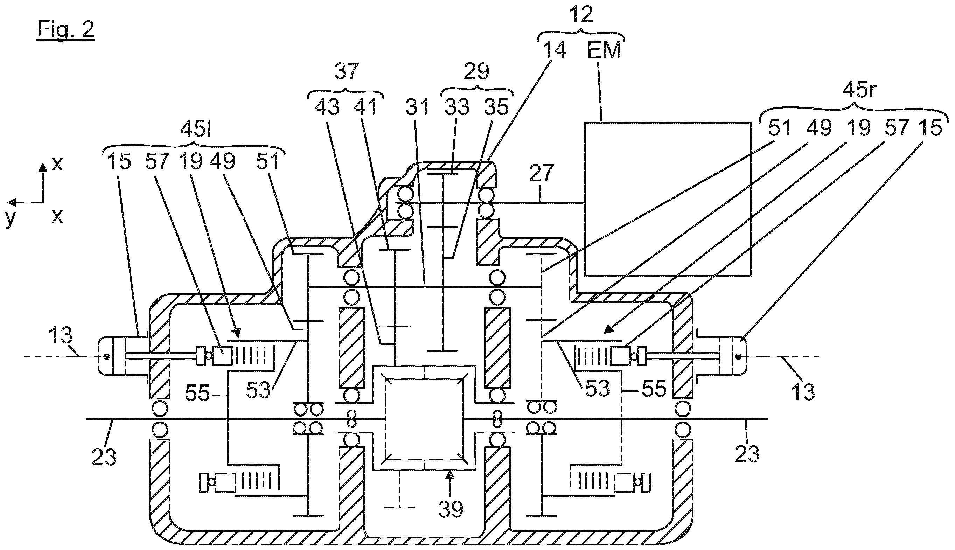

Im Hinblick auf ein einfacheres Verständnis der Erfindung wird anhand der Fig. 1 bis 4 zunächst ein nicht von der Erfindung umfasstes Vergleichsbeispiel beschrieben. In der Fig. 1 ist grob schematisch eine Antriebsvorrichtung für ein zweispuriges Fahrzeug mit einer elektrifizierten Hinterachse angedeutet. Die Antriebsvorrichtung ist in der Fig. 1 nur insoweit dargestellt, als es für das Verständnis der Erfindung erforderlich ist. Demnach weisen sowohl die Vorderräder VR, VL als auch die Hinterräder HR, HL des Fahrzeugs jeweils eine Fahrzeugradbremse 1 auf. Jede der Fahrzeugradbremsen 1 ist aus einem, über einen (nicht gezeigten) Hydraulikzylinder betätigbaren Bremssattel 3 sowie einer Bremsscheibe 5 aufgebaut. Die Hydraulikzylinder der Fahrzeugradbremsen 1 sind jeweils über Hydraulikleitungen 7 mit einer Steuereinheit 8 in Verbindung. Die Steuereinheit 8 kann über eine entsprechende Hydraulikleitung 7 den Hydraulikzylinder einer Fahrzeugbremse 1 mit Bremsdruck beaufschlagen, wodurch der Bremssattel 3 mit seinen Bremsbelägen in Druckanlage mit der Bremsscheibe 5 kommt. In der Fig. 1 sind die beiden, nach fahrzeughinten geführten Hydraulikleitungen 7 bis zu einem Hydraulikventil 9 verlegt. Das Hydraulikventil 9 bildet eine Verzweigungsstelle. An dem Hydraulikventil 9 zweigt die Hydraulikleitung 7 der linken Fahrzeugseite auf in eine Teilleitung 11 zur linken hinteren Fahrzeugbremse 1 und in eine Teilleitung 13, die zu einem Antriebsaggregat 12 der Fahrzeug-hinterachse führt. In gleicher Weise zweigt am Hydraulikventil 9 die Hydraulikleitung 7 der rechten Fahrzeugseite auf in eine Teilleitung 11 zur rechten hinteren Fahrzeugbremse 1 und in eine Teilleitung 13, die ebenfalls zum Antriebsaggregat 12 der Fahrzeughinterachse führt. Das Antriebsaggregat 12 weist gemäß der Fig. 2 eine Elektromaschine EM auf, die über ein Getriebe 14 auf die Hinterräder HR, HL abtreibt.

Jede der beiden Teilleitungen 13 führt von dem Hydraulikventil 9 jeweils zu einem als Hydraulikzylinder 15 ausgeführten Lamellenkupplungsaktuator 15 (Fig. 2) einer Lamellenkupplung 19. Die beiden Lamellenkupplungen 19 sind Bestandteil des Getriebes 14 der Fahrzeug-Hinterachse, dessen Getriebestruktur später beschrieben ist. Gemäß der Fig. 1 ist das Hydraulikventil 9 in zwei Schaltstellungen schaltbar. In der dargestellten Schaltstellung sind die Hydraulikleitungen 7 strömungstechnisch mit den zu den jeweiligen hinteren Fahrzeugradbremsen 1 führenden Teilleitungen 11 verbunden, während die Hydraulikzylinder 15 der beiden Lamellenkupplungen 19 strömungstechnisch von der Steuereinheit 8 entkoppelt sind. Demgegenüber sind in der zweiten Schaltstellung (nicht gezeigt) die beiden Hydraulikleitungen 7 jeweils mit den Teilleitungen 13 strömungstechnisch verbunden, über die die Hydraulikzylinder 15 der Lamellenkupplungen 19 von der Steuereinheit 8 ansteuerbar sind.

Wie aus der Fig. 2 hervorgeht, ist die Elektromaschine EM der elektrifizierten Hinterachse des Fahrzeugs im Quereinbau verbaut, so dass die Elektromaschine EM achsparallel zu den, zu den Fahrzeugrädern HR, HL geführten Flanschwellen 23 angeordnet ist.

Die Elektromaschinenwelle 27 ist über eine Vorgelege-Stirnradstufe 29 mit einer Zwischenwelle 31 verbunden, die aus einem, auf der Elektromaschinenwelle 27 angeordneten Festzahnrad 33 und einem damit kämmenden, auf der Zwischenwelle 31 angeordneten Festzahnrad 35 aufgebaut ist. Die Zwischenwelle 31 ist mit der Eingangsseite eines Achsdifferentials 39 verbunden, und zwar über eine weitere Stirnradstufe 37, die aus einem, auf der Zwischenwelle 31 angeordneten Festzahnrad 41 und einem eingangsseitigen Achsdifferential-Zahnrad 43 aufgebaut ist. Das Achsdifferential 39 treibt in Fahrzeugquerrichtung y beidseitig auf die beiden, zu den Fahrzeugrädern HL, HR führenden Flanschwellen 23 ab.

Wie aus der Fig. 2 weiter hervorgeht, weist die Hinterachse an jeder Fahrzeugseite jeweils ein Überlagerungsgetriebe 45 auf, mittels dem die Elektromaschine EM unter Überbrückung des Achsdifferentials 39 direkt mit der jeweiligen Flanschwelle 23 verbindbar ist. Die beiden Überlagerungsgetriebe 45 sind mit Bezug auf eine Fahrzeugmittellängsebene spiegelbildlich ausgeführt. Jedes der beiden Überlagerungsgetriebe 45 weist ein auf der Flanschwelle 23 drehbar gelagertes Loszahnrad 49 auf, das mit dem Zwischenwellen-Festzahnrad 51 kämmt. Am jeweiligen Loszahnrad 49 ist ein Außenlamellenträger 53 der Lamellenkupplung 19 ausgebildet, der mit einem an der Flanschwelle 23 ausgebildeten Innenlamellenträger 55 zusammenwirkt. Das zwischen Außenlamellenträger 53 und Innenlamellenträger 55 befindliche Lamellenpaket kann über einen Ringkolben 57 zusammengepresst werden, der mittels des Hydraulikzylinders 15 um einen horizontalen Hubweg verstellbar ist, um die Lamellenkupplung 19 bis zu einem vorgegebenen Kupplungsgrad zu betätigen. Die beiden Lamellenkupplungen 19 sind lastschaltbar sowie mit Schlupf steuerbar.

Während der Rekuperationsbetriebsart wird die Elektromaschine EM im Generatorbetrieb betrieben, bei dem die beiden Fahrzeugräder HL, HR ein Bremsmoment M_{L} und M_{B} über die Flanschwellen 22, 25 in Richtung Achsdifferential 39 leiten. Im Achsdifferential 39 werden die beiden Bremsmomente M_{L} und M_{B} zu einem Gesamtbremsmoment aufsummiert, das weiter bis zu der, als Generator arbeitenden Elektromaschine EM geführt wird.

Eine Bremsmomentenumverteilung während der Rekuperationsbetriebsart wird wie folgt durchgeführt: So schaltet die Steuereinheit 8 das Hydraulikventil 9 in seine nicht gezeigte zweite Schaltstellung. Dadurch ist die Steuereinheit 8 zum einen über die Teilleitung 13 der rechten Fahrzeugseite mit dem Hydraulikzylinder 15 der an der rechten Fahrzeugseite angeordneten Lamellenkupplung 19 verbunden. Zum anderen ist die Steuereinheit 8 über die Teilleitung 13 der linken Fahrzeugseite mit dem Hydraulikzylinder 15 der an der linken Fahrzeugseite angeordneten Lamellenkupplung 19 verbunden. Demgegenüber sind die die hinteren Fahrzeugbremsen 1 nicht ansteuerbar und daher stillgelegt. Durch hydraulische Ansteuerung einer der Lamellenkupplungen 19 wird ein Bremsmomentpfad aufgeteilt in einen Differential-Bremsmomentpfad, der ein Differential-Bremsmoment M₂ vom jeweiligen Fahrzeugrad über das Achsdifferential 39 zur Elektromaschine EM führt, und in einen Überlagerungs-Bremsmomentpfad, der ein Überlagerungs-Bremsmoment M₁ vom jeweiligen Fahrzeugrad vorbei am Achsdifferential 39 über das Überlagerungsgetriebe 45 zur Elektromaschine EM führt.

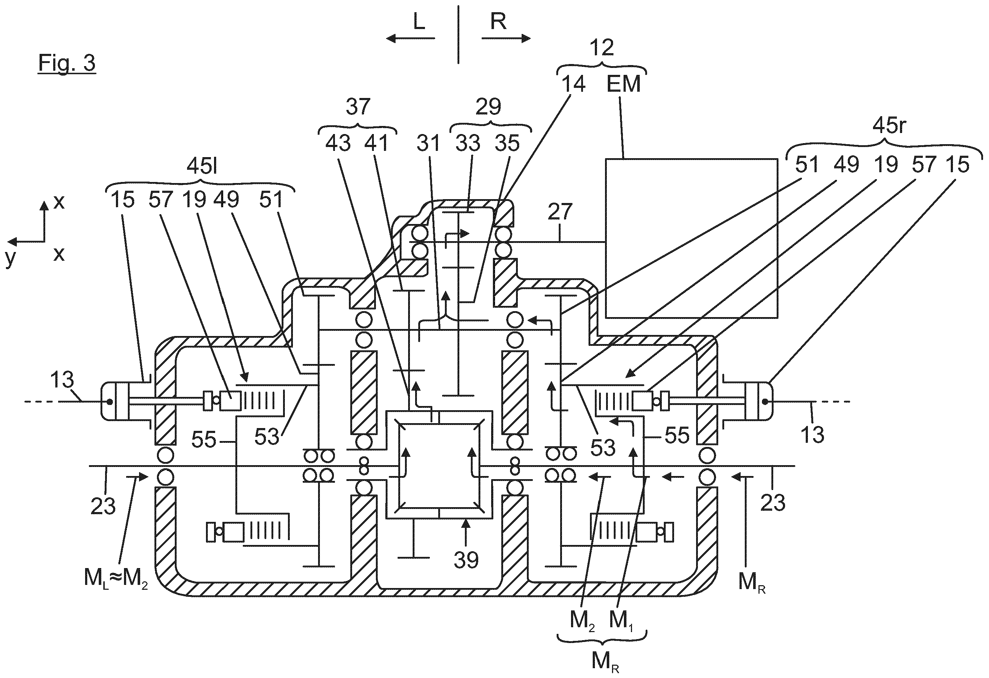

Beispielhaft befindet sich in der Fig. 3 die Elektromaschine EM in der Rekuperationsbetriebsart, während gleichzeitig eine Bremsmomentenumverteilung erfolgt, bei der die rechte Lamellenkupplung 19 nicht komplett, sondern nur bis zu einem bestimmten Kupplungsgrad geschlossen ist, der Schlupf zulässt. Die linke Lamellenkupplung 19 ist dagegen vollständig geöffnet. Gemäß der Fig. 3 wird an der rechten Lamellenkupplung 19 das am rechten Hinterrad HR abgesetzte Bremsmoment M_{R} aufgeteilt in ein zu dem Achsdifferential 39 führenden Differential-Moment M₂ und in ein Überlagerungs-Moment M₁, das über die Lamellenkupplung 19 zur Zwischenwelle 31 geleitet wird. Das linke Hinterrad HL nimmt über das Achsdifferential 39 das Differential-Moment M₂ der rechten Fahrzeugseite an. Es werden daher das Differential-Moment M₂ vom linken Hinterrad HL und das Differential-Moment M₂ vom rechten Hinterrad HL über das Achsdifferential 39 zur Zwischenwelle 31 geleitet. Zudem wird das Überlagerungs-Moment M₁ vom rechten Hinterrad HR über das Überlagerungsgetriebe 45 der rechten, aktuierten Fahrzeugseite zur Zwischenwelle 31 geleitet. Die Zwischenwelle 31 wirkt als eine Summierwelle, an der sämtliche Bremsmomente zu einem Gesamtbremsmoment aufaddiert werden, das über die Vorgelegestufe 29 zur Elektromaschine EM geleitet wird und dort rekuperiert wird.

Um einen Bremsmomentfluss von der Flanschwelle 23 über die geschaltete Lamellenkupplung 19 in Richtung auf die Elektromaschine EM zu gewährleisten, ist es von Relevanz, dass zwischen der Flanschwelle 23 und dem Loszahnrad 49 eine Drehzahldifferenz vorliegt, bei der das Loszahnrad 49 etwas langsamer dreht als die Flanschwelle 23. Die Übersetzung zwischen der Elektromaschine EM und dem Loszahnrad 49 ist daher etwas kürzer ausgelegt als die Übersetzung zwischen der Elektromaschine EM und der Differential-Eingangsseite.

Sobald die Steuereinheit 8 während der Rekuperationsbetriebsart eine Notsituation erkennt und/oder ein ABS/8-Eingriff erfolgen soll, beendet die Steuereinheit 8 die Rekuperationsbetriebsart. In diesem Fall verstellt die Steuereinheit 8 das Hydraulikventil 9 in die, in der Fig. 1 gezeigte Schaltstellung, wodurch die Fahrdynamikregelung im weiteren Fahrbetrieb alleine mit Hilfe der hinteren Fahrzeugradbremsen 1 durchgeführt wird, während die Lamellenkupplungen 19 nicht mehr ansteuerbar sind.

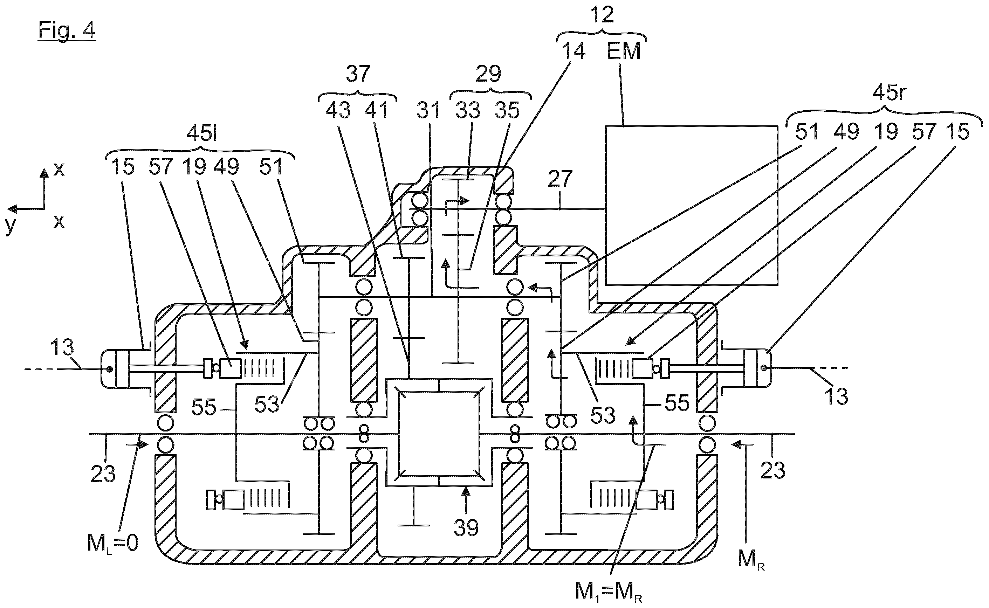

In der Fig. 4 ist eine weitere Betriebssituation während der Rekuperationsbetriebsart angedeutet. Demnach ist die rechte Lamellenkupplung 19 komplett geschlossen. Die linke Lamellenkupplung 19 ist dagegen vollständig geöffnet. Somit wird in der Fig. 4 das am rechten Hinterrad HR abgesetzte Bremsmoment M_{R} vollständig über die Lamellenkupplung 19 bis zur Zwischenwelle 31 geleitet wird. Von dort wird das Bremsmoment über die Vorgelegestufe 29 in die Elektromaschine EM geleitet, in der eine Rekuperation stattfindet. Das linke Hinterrad HL dreht dagegen lastfrei, und zwar bei einer Drehzahl, die vom Achsdifferential 31 aufgeprägt wird.

Im obigen Vergleichsbeispiel muss für die Durchführung einer ABS-Funktion an der Fahrzeugachse die folgende Bedingung erfüllt sein: Zumindest ein Fahrzeugrad HL, HR der Fahrzeugachse muss frei drehen, damit sich eine sensorisch erfassbare Referenz-Drehzahl n_{ref} einstellen kann, die mit der aktuellen Fahrzeuggeschwindigkeit korreliert, die für die Steuereinheit 8 einen Referenzwert bildet, auf dessen Grundlage die Steuereinheit 8 die ABS-Funktion steuert. Bei aktivierter ABS-Funktion stellt die Steuereinheit 8 die auf die verbleibenden drei Fahrzeugräder wirkenden Bremsmomente ein. Die Antriebsvorrichtung gemäß dem Vergleichsbeispiel (Fig. 1 bis 4) ist während der Rekuperationsbetriebsart nicht ABS-tauglich, da sich in der Rekuperationsbetriebsart kein frei drehendes Fahrzeugrad HL, HR an der Fahrzeugachse einstellen kann. Zwar kann bei auf der aktuierten Fahrzeugseite komplett, das heißt schlupffrei geschlossener Lamellenkupplung 19 das Fahrzeugrad auf der anderen, nicht aktuierten Fahrzeugseite lastfrei geschaltet werden (siehe der Betriebszustand gemäß der Fig. 4). Allerdings wird dem lastfrei geschalteten Fahrzeugrad während der Rekuperationsbetriebsart über das Achsdifferential 39 eine Drehzahl aufgeprägt, die nicht mit der aktuellen Fahrzeuggeschwindigkeit korreliert und daher nicht als ein Referenzwert für die ABS-Funktion geeignet ist. Um im Vergleichsbeispiel eine freie Drehung eines Fahrzeugrads zu erzielen, müsste die Rekuperationsbetriebsart der Elektromaschine EM deaktiviert werden, sodass die Elektromaschine EM frei dreht, wodurch das Achsdifferential 39 lastfrei geschaltet ist. In diesem Fall kann jedoch während der Durchführung der ABS-Funktion keine Rekuperationsenergie gewonnen werden.

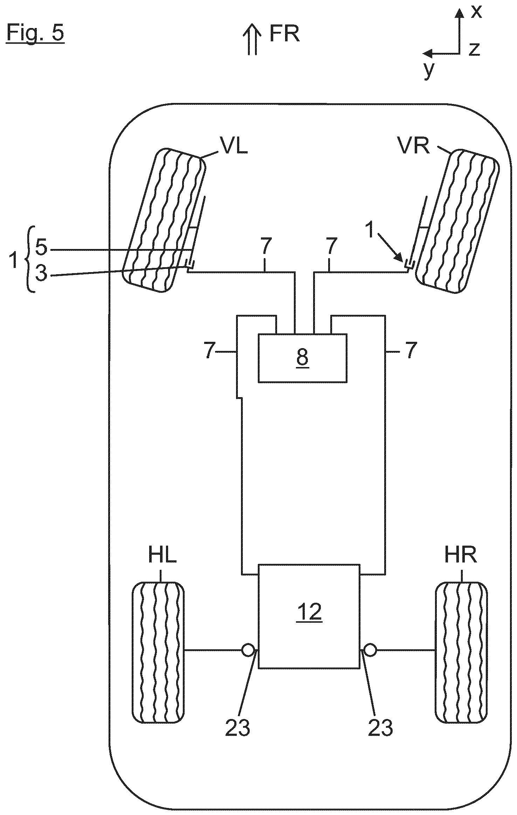

Demgegenüber ist in den Figuren 5 bis 9 ein zweites, nicht von der Erfindung umfasstes Vergleichsbeispiel gezeigt, das so ausgelegt ist, dass auch während der Durchführung der ABS-Funktion die Rekuperationsbetriebsart aufrechterhalten werden kann, sodass auch während der Durchführung der ABS-Funktion Rekuperationsenergie gewinnbar ist.

Hierzu weist die Fahrzeugachse an beiden Fahrzeugseiten jeweils eine als Klauenkupplung 58 realisierte Trennkupplung auf. Die Klauenkupplung 58 teilt an jeder Fahrzeugseite die Flanschwelle 23 auf in eine differentialseitige Teilwelle 59 und in eine radseitige Teilwelle 61. Der Innenlamellenträger 55 der jeweiligen Lamellenkupplung 19 ist auf der radträgerseitigen Teilwelle 61 drehfest angeordnet. Entsprechend ist das Überlagerungsgetriebe 45 über die Lamellenkupplung 19 mit der radseitigen Teilwelle 61 koppelbar, während die differentialseitige Teilwelle 59 ohne Anbindung an das Überlagerungsgetriebe 45 ist. Sofern eine der beiden Klauenkupplungen 57 geöffnet ist, ist das Achsdifferential 39 lastfrei geschaltet, wodurch der Differential-Bremsmomentpfad unterbrochen ist und eine Bremsmomentübertragung vom Fahrzeugrad nur noch über das Überlagerungsgetriebe 45 zur Elektromaschine EM ermöglicht ist.

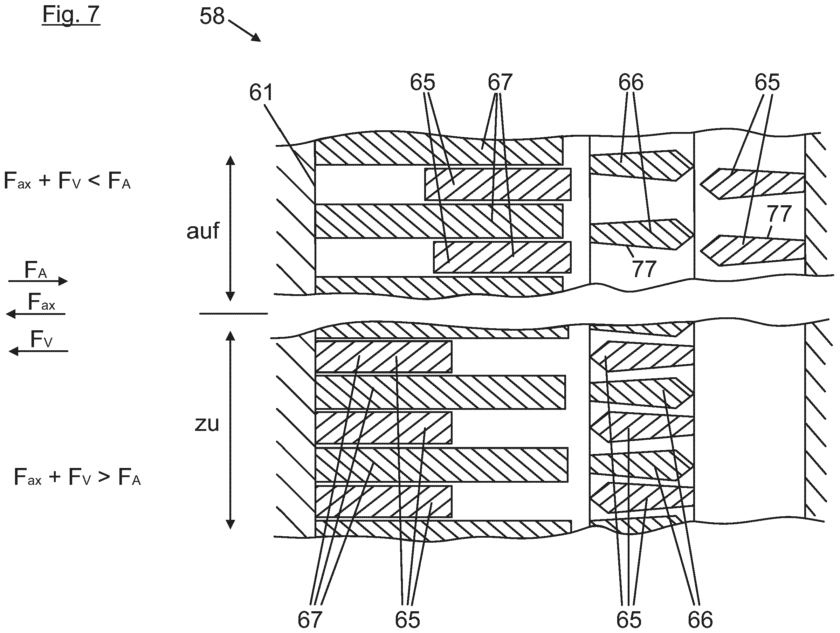

Die Klauenkupplung 58 weist eine Schiebemuffe 63 auf, die zwischen einer Offenstellung und einer Geschlossenstellung axial verstellbar ist. In der Fig. 7 ist die Klauenkupplung 58 in einer Abwicklung sowohl in Offenstellung ("auf") als auch in Geschlossenstellung ("zu") schematisch dargestellt. In der Geschlossenstellung ist eine Schiebemuffen-Innenverzahnung 65 mit den Außenverzahnungen 66, 67 der differentialseitigen Teilwelle 59 und der radseitigen Teilwelle 61 in Zahneingriff. Demgegenüber ist in der Offenstellung der Zahneingriff gelöst, sodass keine Momentenübertragung über die Klauenkupplung 58 erfolgt. Der Schiebemuffe 63 der Klauenkupplung 58 ist eine Vorspannfeder 69 zugeordnet, mittels der die Schiebemuffe 63 mit einer Federvorspannkraft Fv (Fig. 7) in Richtung Geschlossenstellung vorg8annt ist.

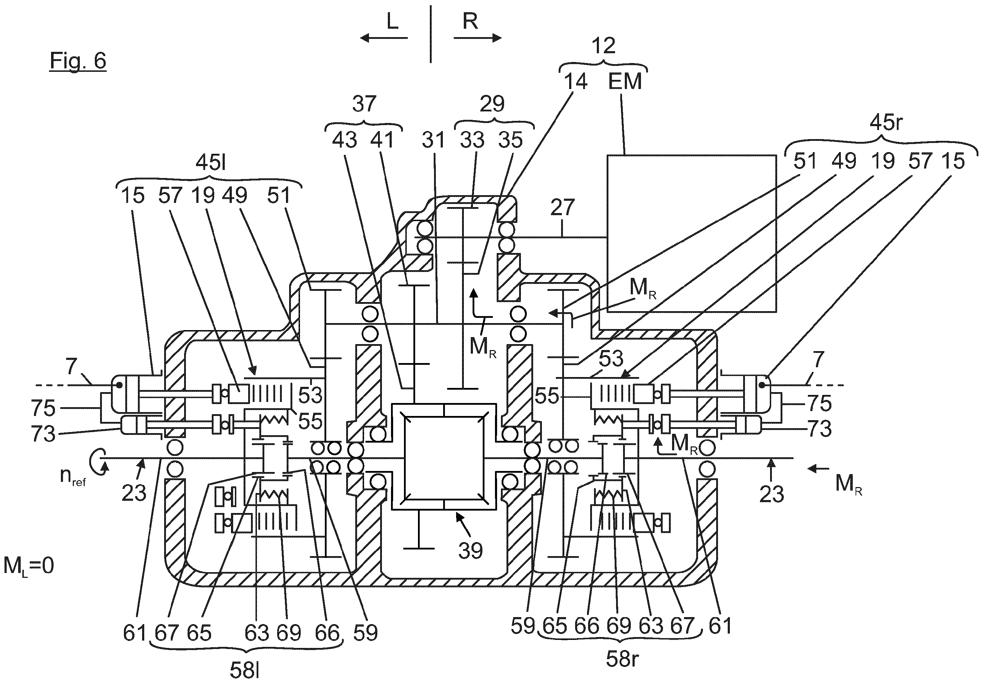

Gemäß der Fig. 6 sind sowohl der Lamellenkupplungsaktuator 15 als auch der Schiebemuffenaktuator 73 als Hydraulikzylinder realisiert, die an jeder Fahrzeugseite über eine gemeinsame Hydraulikleitung 7 mit der Steuereinheit 8 verbunden sind, wie es in der Fig. 5 gezeigt ist. Die gemeinsame Hydraulikleitung 7 ist dabei druckübertragend unmittelbar mit dem Lamellenkupplungsaktuator 15 verbunden. Der Lamellenkupplungsaktuator 15 ist wiederum über eine Verbindungsleitung 75 druckübertragend mit dem Schiebemuffenaktuator 73 verbunden. Bei Ansteuerung durch die Steuereinheit 8 wird im Lamellenkupplungsaktuator 15 ein Hydraulikdruck aufgebaut, mit dem der Ringkolben 57 gegen ein Lamellenpaket der Lamellenkupplung 19 drückt, um die Lamellenkupplung 19 bis zu einem vorgegebenen Kupplungsgrad zu schließen. Der Ringkolben 57 drückt außerdem gegen das Lamellenpaket der Lamellenbremse 81. In gleicher Weise wird auch im Schiebemuffenaktuator 73 ein Hydraulikdruck aufgebaut, mit dem die Schiebemuffe 63 mit einer in Richtung Offenstellung wirkenden Aktuatorkraft F_{A} beaufschlagt wird.

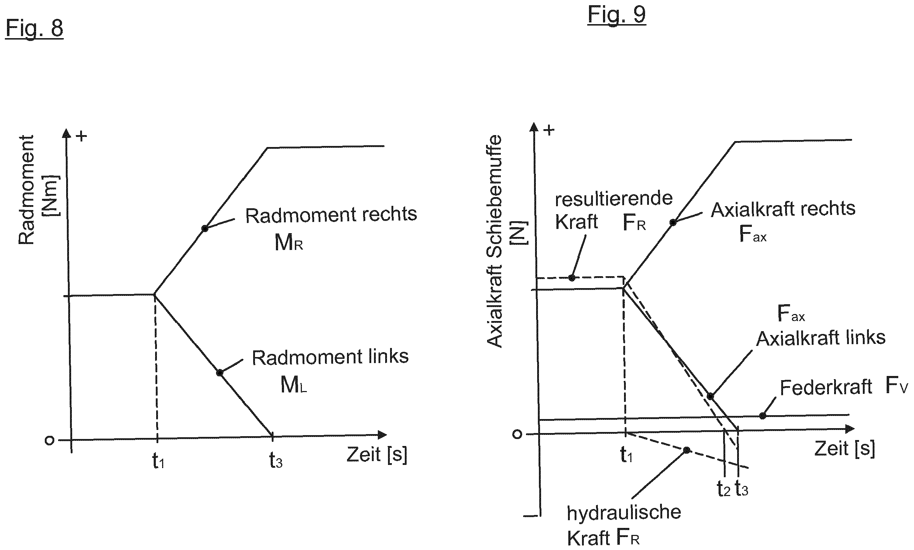

Wie aus der in der Fig. 7 gezeigten Abwicklung hervorgeht, befinden sich in der Geschlossenstellung die einander zugewandten Zahnflanken 77 der Schiebemuffen-Innenverzahnung 65 und der Außenverzahnung 66 der differentialseitigen Teilwelle 59 in Druckanlage. Die Zahnflanken 77 weisen schräggestellte Hinterlegungen auf, sodass unter Bremsmomentwirkung die Schiebemuffe 63 mit einer in Richtung Geschlossenstellung wirkenden Axialkraftkomponente Fₐₓ beaufschlagt wird. Die Größe der Axialkraftkomponente Fₐₓ korreliert dabei mit der Größe des zu übertragenden Bremsmoments, wie es aus den beiden Fig. 8 und 9 hervorgeht. Das heißt, dass bei kleiner werdendem Bremsmoment sich die Axialkraftkomponente Fₐₓ reduziert, während bei größer werdendem Bremsmoment sich die Axialkraftkomponente Fₐₓ vergrößert. In der Fig. 7 sind die Wirkrichtungen der auf die Schiebemuffe 63 wirkenden Kräfte gezeigt, nämlich die Axialkraftkomponente Fₐₓ, die Vorspannkraft Fv der Vorspannfeder 69 und die Aktuatorkraft F_{A} des Schiebemuffenaktuators 73. In der unteren Hälfte der Abwicklung (Fig. 7) ist die Summe aus der Axialkraftkomponente Fₐₓ und der Vorspannkraft Fv größer als die Aktuatorkraft F_{A}, so dass die Klauenkupplung 58 geschlossen bleibt. Demgegenüber ist in der oberen Hälfte der Abwicklung (Fig. 7) die Summe aus der Axialkraftkomponente Fₐₓ und der Vorspannkraft Fv kleiner als die Aktuatorkraft F_{A}, so dass die Klauenkupplung 58 geschlossen ist.

Nachfolgend wird anhand der Fig. 8 und 9 eine Betriebssituation während der Rekuperationsbetriebsart beschrieben. Im Diagramm der Fig. 8 sind die während dieser Betriebssituation erzeugten Bremsmomente eingezeichnet. Im Diagramm der Fig. 9 sind die auf die Schiebemuffe 63 wirkenden Kräfte eingezeichnet. Bis zum Zeitpunkt t₁ sind an beiden Fahrzeugseiten die Klauenkupplungen 58 geschlossen und die Lamellenkupplungen 19 geöffnet. Es erfolgt daher eine gleichmäßige Bremsmomentenverteilung, bei der die an beiden Fahrzeugseiten absetzbaren Bremsmomente M_{L}, M_{R} gleich groß sind. Die beiden Bremsmomente M_{L}, M_{R} werden am Achsdifferential 39 zu einem Gesamtmoment zusammengeführt, das in Richtung Elektromaschine EM geleitet wird.

Ab dem Zeitpunkt t₁ erfolgt gemäß der Fig. 8 eine Bremsmomentenumverteilung, bei der an der rechten Fahrzeugseite die Lamellenkupplung 19 aktuiert wird, während die Lamellenkupplung 19 der linken Fahrzeugseite offen bleibt. Die beiden Klauenkupplungen 58 sind nach wie vor geschlossen. Dadurch steigt das an der rechten Fahrzeugseite absetzbare Bremsmoment M_{R} an, das sich aus einem über das Achsdifferential 39 geführten Differential-Bremsmoment M₂ und einem über das rechte Überlagerungsgetriebe 45 geführten Überlagerungs-Bremsmoment M₁ zusammensetzt. Das auf der linken Fahrzeugseite absetzbare Bremsmoment M_{L} nimmt den Wert des reduzierten Differential-Bremsmoments M₂ der rechten Fahrzeugseite an.

Mit Erreichen des Zeitpunkts t₃ nähert sich in der Fig. 8 das auf der linken Fahrzeugseite absetzbare Bremsmoment M_{L} der Nullmarke an. In diesem Fall besteht an der linken Fahrzeugseite die Gefahr, dass das Fahrzeugrad HL blockiert. Es wird daher aus Sicherheitsgründen die Fahrdynamik-Regelfunktion (ABS-Funktion) aktiviert, um eine solche Fahrzeugrad-Blockade zu unterbinden. Für die Aktivierung der Fahrdynamik-Regelfunktion muss eine der Klauenkupplungen 58 geöffnet werden, damit sich die Drehzahl n_{ref} (Fig. 6) eines frei drehenden Fahrzeugrads als Referenzwert für die Fahrdynamik-Regelfunktion einstellt.

Ein solches Öffnen der Klauenkupplung 58 wird steuerungstechnisch einfach sowie selbsttätig wie folgt erzielt: So erfolgt der Öffnungsvorgang die rechten Klauenkupplung 58 unter Nutzung der auf die Schiebemuffe 63 wirkenden Kräfte, nämlich Axialkraftkomponente Fₐₓ, Federvorspannkraft Fv und Aktuatorkraft F_{A}. Diese sind so ausgelegt, dass eine resultierende Kraft F_{R} (Fig. 9) die Schiebemuffe 63 erst dann in die Offenstellung verstellt, wenn die Axialkraftkomponente Fₐₓ aufgrund kleiner werdendem Bremsmoment M₂ einen Axialkraft-Grenzwert unterschreitet. Dies erfolgt in der Fig. 9 zum Zeitpunkt t₂, zu dem kaum noch ein Bremsmoment M_{L} vom linken Fahrzeugrad HL absetzbar ist und daher die Gefahr einer Fahrzeugrad-Blockade besteht.

In der Fig. 6 ist beispielhaft auf der linken, nicht aktuierten Fahrzeugseite ABS-Funktion aktiviert. Die sich daraus ergebenden Bremsmomente sind eingetragen. Demnach wird das auf der rechten Fahrzeugseite absetzbare Bremsmoment M_{R} über die geschlossene Lamellenkupplung 19 zur Elektromaschine EM geleitet. Die linke Klauenkupplung 58 ist geschlossen, während die linke Lamellenkupplung 19 geöffnet ist. Die rechte Klauenkupplung 58 ist aufgrund des auf die Schiebemuffe 63 einwirkenden Kräfteverhältnisses geöffnet. Dadurch ist die rechte Ausgangsseite des Achsdifferentials 39 lastfrei geschaltet. Das Fahrzeugrad HL an der linken Fahrzeugseite dreht daher frei, so dass sich eine, mit der tatsächlichen Fahrzeuggeschwindigkeit korrelierende Referenzdrehzahl n_{ref} einstellt.

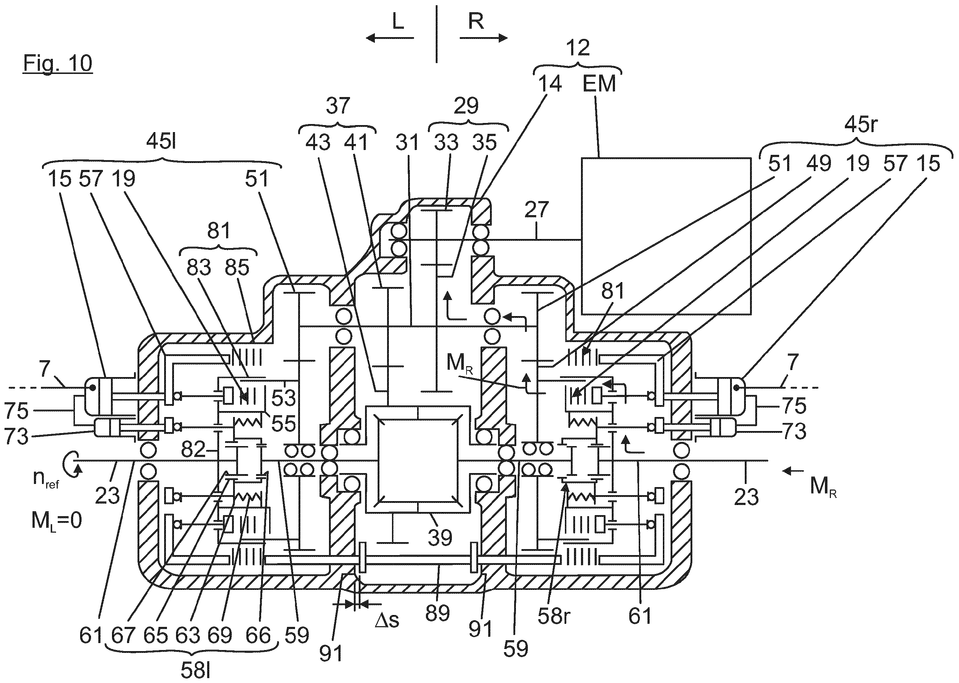

In Figur 10 ist ein Ausführungsbeispiel der Erfindung gezeigt, dessen grundsätzlicher Aufbau sowie Funktionsweise im Wesentlichen identisch ist wie im vorangegangenen Vergleichsbeispiel. Im Unterschied zum Vergleichsbeispiel der Figuren 5 bis 9 ist im Ausführungsbeispiel der Figur 10 an jeder Fahrzeugseite zusätzlich eine als Fahrzeugradbremse wirkende Lamellenbremse 81 angeordnet. Der Innenlamellenträger 83 der Lamellenbremse 81 ist über einen radialen Verbindungsflansch 82 fest an der Flanschwelle 23 angebunden.

Die Lamellenbremse 81 weist ein Lamellenpaket auf, das zwischen einen Innenlamellenträger 83 und einem Außenlamellenträger 85 angeordnet ist. Das Lamellenpaket der Lamellenbremse 81 und das Lamellenpaket der Lamellenkupplung 19 sind an jeder Fahrzeugseite über den Hydraulikzylinder 15 (das heißt Lamellenkupplungsaktuator) betätigbar. Während einer Fahrzeugbremsung steuert die Steuereinheit 8 einen oder beide Hydraulikzylinder 15 mit einem Bremsdruck an. Dadurch baut sich im jeweiligen Hydraulikzylinder 15 ein Hydraulikdruck auf, mit dem der Ringkolben 57 um einen Schließhub bewegt wird und sowohl gegen das Lamellenpaket der Lamellenkupplung 19 als auch gegen das Lamellenpaket der Lamellenbremse 81 drückt.

Der Ringkolben 57 drückt ausgehend vom unbetätigten Zustand das Lamellenpaket der Lamellenkupplung 19 über ein Lamellenkupplungs-Lüftspiel s_{K} bis Erreichen des Kisspoints gegen einen Axialanschlag 87 (Fig. 10), der axial unverstellbar am Innenlamellenträger 55 der Lamellenkupplung 19 befestigt ist. Gleichzeitig drückt der Ringkolben 57 das Lamellenpaket der Lamellenbremse 81 über ein Lamellenbremsen-Lüftspiel s_{B} bis Erreichen des Kisspoints gegen einen Druckstab 89. Dieser wirkt auf beiden Fahrzeugseiten als axial verstellbarer Axialanschlag, gegen den das Lamellenpaket der jeweiligen Lamellenbremse 81 gedrückt wird. Der Druckstab 89 ist zwischen Bewegungsanschlägen 91 um einen Druckstab-Axialweg Δs (Fig. 10) axial verstellbar.

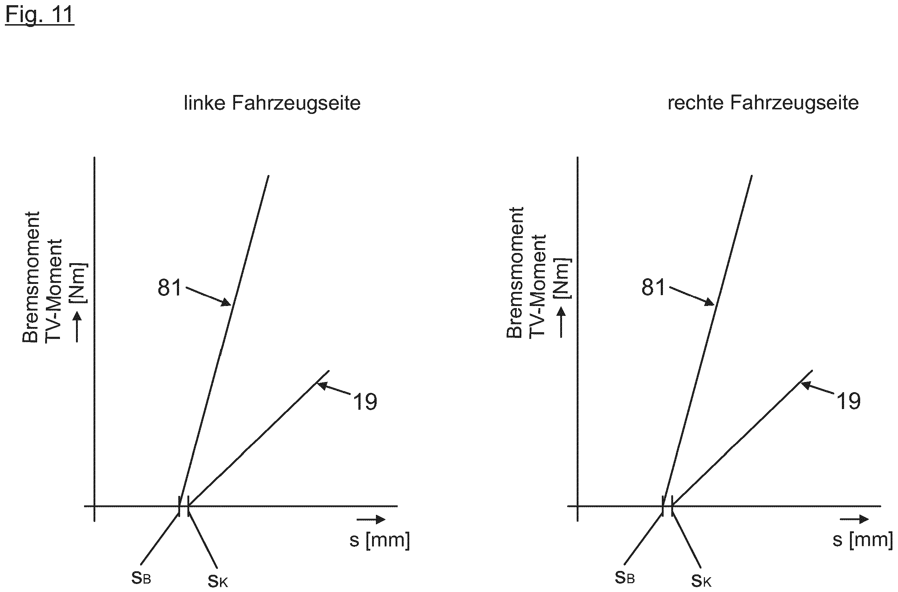

Nachfolgend wird anhand der Figur 11 eine gleichmäßige Bremsung beschrieben, bei der die Steuereinheit 8 die Hydraulikzylinder 15 beider Fahrzeugseiten mit gleichem Bremsdruck beaufschlagt. In diesem Fall bleibt der Druckstab 89 zentriert, das heißt ortfest ohne Verlagerung nach links oder nach rechts. Gemäß der Figur 11 ist auf beiden Fahrzeugseiten das Lamellenbremsen-Lüftspiel s_{B} kleiner bemessen als das Lamellenkupplungs-Lüftspiel s_{K}. Beim Schließhub des Ringkolbens 57 kommt daher zunächst die Lamellenbremse 81 in Bremseingriff und erst im weiteren Verlauf die Lamellenkupplung 19 in Bremseingriff.

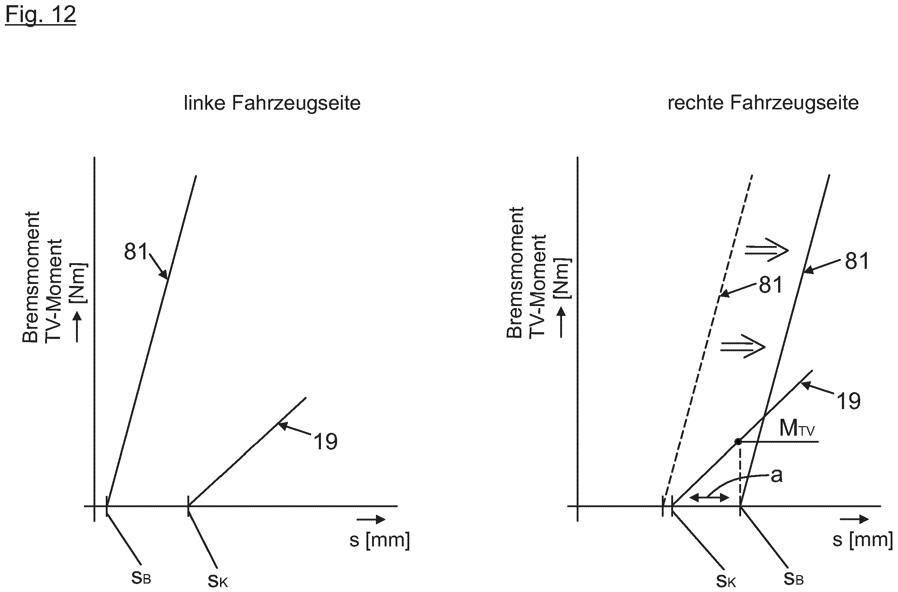

Anhand der Figur 12 wird eine ungleichmäßige Bremsung beschrieben, bei der die Steuereinheit 8 beispielhaft den Hydraulikzylinder 15 der rechten Fahrzeugseite mit Bremsdruck beaufschlagt, während die linke Fahrzeugseite nicht mit Bremsdruck beaufschlagt ist. Beim Schließhub des rechten Ringkolbens 57 wird sowohl das Lamellenpaket der rechten Lamellenkupplung 19 gegen den Axialanschlag 87 gedrückt als auch das Lamellenpaket der rechten Lamellenbremse 81 gegen den als Axialanschlag wirkenden Druckstab 89 gedrückt. Dadurch wird der Druckstab 89 um den Druckstab-Axialweg Δs in Richtung linke Fahrzeugseite verstellt. Es wird daher die Bremsenkennline der Lamellenbremse 81, wie im rechten Diagramm der Figur 12 durch Doppelpfeile angedeutet, verschoben. Damit stellt sich auf der rechten Fahrzeugseite ein Lamellenbremsen-Lüftspiel s_{B} ein, das um den Druckstab-Axialweg Δs erhöht ist, und zwar im Vergleich zum Bremsfall mit gleichmäßiger Bremsung (Fig. 11). Das Lamellenbremsen-Lüftspiel s_{B} ist dabei um ein Zusatzmaß a größer bemessen als das Lamellenkupplungs-Lüftspiel s_{K}. Auf diese Weise ist gewährleistet, dass das auf der rechten Fahrzeugseite absetzbare Bremsmoment M_{R} zunächst über das rechte Überlagerungsgetriebe 45 zur Elektromaschine EM geführt wird und dort rekuperiert wird. Sofern im weiteren Bremsverlauf das rechte Lamellenbremsen-Lüftspiel s_{B} aufgebraucht ist, kommt zusätzlich noch die Lamellenbremse 81 in Bremseingriff. Im rechten Diagramm der Figur 12 ist ein Bremsmoment M_{TV} eingetragen. Das Bremsmoment M_{TV} wird bei Erreichen des Kisspoints der rechten Lamellenbremse 81, das heißt mit Aufbrauch des rechten Lamellenbremsen-Lüftspiel s_{B}, über das rechte Überlagerungsgetriebe 45 in Richtung Elektromaschine EM geleitet.

Auf der gegenüberliegenden, nicht mit Bremsdruck beaufschlagten linken Fahrzeugseite ergibt sich gemäß dem linken Diagramm der Figur 12 die folgende Konstellation: Das hier verfügbare Lamellenbremsen-Lüftspiel s_{B} ist aufgrund der Druckstab-Verstellung nach links reduziert. Dabei ist das Lamellenbremsen-Lüftspiel s_{B} kleiner als das Lamellenkupplungs-Lüftspiel s_{K} bemessen, so dass das eine Betätigung der Lamellenkupplung 19 an der nicht mit Bremsdruck beaufschlagten Fahrzeugseite ausgeschlossen ist.

Es ist hervorzuheben, dass die Erfindung nicht auf das Ausführungsbeispiel der Fig. 10 bis 12 beschränkt ist. Vielmehr sind die Lamellenbremsen 81, deren Aufbau und Funktionsweise anhand der Fig. 10 bis 12 erläutert ist, auch in dem Vergleichsbeispiel der Fig. 1 bis 4 sowie in dem Vergleichsbeispiel der Fig. 5 bis 9 verbaubar.

### BEZUGSZEICHENLISTE:

- 1: Fahrzeugradbremsen
- 3: Bremssattel
- 5: Bremsscheibe
- 7: Hydraulikleitungen
- 9: Hydraulikventil
- 11: Teilleitung
- 12: Antriebsaggregat
- 13: Teilleitung
- 14: Getriebe
- 15: Hydraulikzylinder der Lamellenkupplungen 19
- 19: Lamellenkupplungen
- 23: Flanschwellen
- 27: Elektromaschinenwelle
- 29: Vorgelege-Stirnradstufe
- 31: Zwischenwelle
- 33: Festzahnrad
- 35: Festzahnrad
- 37: weitere Stirnradstufe
- 39: Achsdifferential
- 41: Festzahnrad
- 43: Achsdifferential-Zahnrad
- 45: Überlagerungsgetriebe
- 45l: linksseitiges Überlagerungsgetriebe
- 45r: rechtsseitiges Überlagerungsgetriebe
- 49: Loszahnrad
- 51: Zwischenwellen-Festzahnrad
- 53: Außenlamellenträger
- 55: Innenlamellenträger
- 57: Ringkolben
- 58: Trennkupplung
- 58r: rechtsseitige Trennkupplung
- 58l: linksseitige Trennkupplung
- 59: differentialseitige Teilwelle
- 61: radseitige Teilwelle
- 63: Schiebemuffe
- 65: Schiebemuffen-Innenverzahnung
- 66: Außenverzahnung der differentialseitigen Teilwelle
- 67: Außenverzahnung der radseitigen Teilwelle
- 69: Vorspannfeder
- 73: Schiebemuffenaktuator
- 75: Verbindungsleitung
- 77: Zahnflanke
- 81: Lamellenbremse
- 82: radialen Verbindungsflansch
- 83: Innenlamellenträger
- 85: Außenlamellenträger
- 87: Axialanschlag der Lamellenkupplung
- 89: Druckstab
- 91: Bewegungsanschläge
- HL, HR: Fahrzeugräder
- 8: Steuereinheit
- EM: Elektromaschine
- M_{L}: am linken Hinterrad HL absetzbares Bremsmoment
- M_{R}: am rechten Hinterrad HR absetzbares Bremsmoment
- M₁: Überlagerungs-Moment
- M₂: Differential-Moment
- F_{V}: Vorspannfederkraft
- F_{A}: Aktuatorkraft
- Fₐₓ: Axialkraftkomponente
- F_{R}: resultierende Kraft
- n_{ref}: Referenzdrehzahl
- s_{B}: Lamellenbremsen-Lüftspiel
- s_{K}: Lamellenkupplungs-Lüftspiel
- Δs: Druckstab-Axialweg
- a: Zusatzmaß
- L: linke Fahrzeugseite
- R: rechte Fahrzeugseite

## Patentansprüche

1. Antriebsvorrichtung für eine Fahrzeugachse eines zweispurigen Fahrzeugs, das ein Achsdifferential (39) aufweist, dessen Eingangsseite trieblich mit einer Elektromaschine (EM) verbunden ist und dessen Ausgangsseiten auf, zu den beiden Fahrzeugrädern (HL, HR) führenden Flanschwellen (23) abtreiben, wobei die Fahrzeugachse an jeder Fahrzeugseite jeweils ein Überlagerungsgetriebe (45) mit Lamellenkupplung (19) aufweist, mittels dem die Elektromaschine (EM) unter Überbrückung des Achsdifferentials (39) direkt mit der Fahrzeugrad-Flanschwelle (23) verbindbar ist, wobei die Lamellenkupplungen (19) von einer Steuereinheit (8) ansteuerbar sind, und zwar insbesondere für eine in der Rekuperationsbetriebsart der Elektromaschine (EM) erfolgende Bremsmomentenumverteilung zwischen den Fahrzeugseiten,
**dadurch gekennzeichnet,**
**dass** an jeder Fahrzeugseite der Lamellenkupplung (19) eine als Fahrzeugradbremse wirkende Lamellenbremse (81) zugeordnet ist, mittels der alternativ oder zusätzlich zur Lamellenkupplung (19) Fahrzeugbremsungen durchführbar sind.

2. Antriebsvorrichtung nach Anspruch 1, **dadurch gekennzeichnet, dass** an jeder Fahrzeugseite sowohl die Lamellenkupplung (19) als auch die Lamellenbremse (81) über einen gemeinsamen Hydraulikzylinder (15) betätigbar sind, der über genau eine Hydraulikleitung (7) mit der Steuereinheit (8) verbunden ist, und das insbesondere der Hydraulikzylinder (15) bei Ansteuerung durch die Steuereinheit (8) einen Hydraulikdruck aufbaut, mit dem ein Druckelement, insbesondere ein Ringkolben (57), sowohl gegen ein Lamellenpaket der Lamellenkupplung (19) als auch gegen ein Lamellenpaket der Lamellenbremse (81) drückt.

3. Antriebsvorrichtung nach Anspruch 1 oder 2, **dadurch gekennzeichnet, dass** das Druckelement (57) ausgehend vom unbetätigten Zustand das Lamellenpaket der Lamellenkupplung (19) über ein Lüftspiel (s_{K}) bis Erreichen des Kisspoints gegen einen Axialanschlag (87) drückt, und dass insbesondere das Lüftspiel (s_{K}) unabhängig vom Bremsfall, das heißt bei an jeder Fahrzeugseite gleichmäßiger Bremsung oder ungleichmäßiger Bremsung, unveränderlich ist.

4. Antriebsvorrichtung nach Anspruch 3, **dadurch gekennzeichnet, dass** das Druckelement (57) ausgehend vom unbetätigten Zustand das Lamellenpaket der Lamellenbremse (81) über ein Lüftspiel (s_{B}) bis Erreichen des Kisspoints gegen einen Axialanschlag (89) drückt, und dass insbesondere das Lüftspiel (s_{B}) in Abhängigkeit vom Bremsfall variiert, und zwar insbesondere durch axiale Verstellung des Axialanschlags (89).

5. Antriebsvorrichtung nach Anspruch 4, **dadurch gekennzeichnet, dass** bei gleichmäßiger Bremsung auf beiden Fahrzeugseiten das Lamellenbremsen-Lüftspiel (s_{B}) kleiner bemessen ist als das Lamellenkupplungs-Lüftspiel (s_{K}), so dass insbesondere beim Schließhub des Druckelements (57) zunächst die Lamellenbremse (81) in Bremseingriff kommt und erst im weiteren Verlauf die Lamellenkupplung (19) in Bremseingriff kommt.

6. Antriebsvorrichtung nach Anspruch 4 oder 5, **dadurch gekennzeichnet, dass** bei einer ungleichmäßigen Bremsung auf beiden Fahrzeugseiten das Lamellenbremsen-Lüftspiel (s_{B}) größer bemessen ist als das Lamellenkupplungs-Lüftspiel (s_{K}), so dass beim Schließhub des Druckelements (57) zunächst die Lamellenkupplung (19) der von der Steuereinheit (8) mit größerem Bremsdruck angesteuerten Fahrzeugseite in Bremseingriff kommt und erst im weiteren Verlauf die Lamellenbremse (81) in Bremseingriff kommt.

7. Antriebsvorrichtung nach einem der Ansprüche 4 bis 6, **dadurch gekennzeichnet, dass** der axial verstellbare Axialanschlag der Lamellenbremse (81) ein Druckstab (89) ist, und dass der Druckstab (89) auf beiden Fahrzeugseiten als axial verstellbarer Axialanschlag wirkt, der zwischen Bewegungsanschlägen (91) um einen Druckstab-Axialweg (Δs) axial verstellbar ist.

8. Antriebsvorrichtung nach Anspruch 7, **dadurch gekennzeichnet, dass** bei einer ungleichmäßigen Bremsung an der mit größerem Bremsdruck beaufschlagten Fahrzeugseite beim Schließhub des Druckelements (57) das Lamellenpaket der Lamellenbremse (81) den Druckstab (89) um den Druckstab-Axialweg (Δs) in Richtung Gegendruck-Fahrzeugseite verstellt, so dass sich das verfügbare Lamellenbremsen-Lüftspiel (ss) um den Druckstab-Axialweg (Δs) erhöht, und zwar im Vergleich zum Bremsfall mit gleichmäßiger Bremsung, und dass insbesondere das Lamellenbremsen-Lüftspiel (ss) um ein Zusatzmaß (a) größer bemessen ist als das Lamellenkupplungs-Lüftspiel (s_{K}), so dass insbesondere beim Schließhub des Druckelements (57) zunächst die Lamellenkupplung (19) in Bremseingriff kommt und erst im weiteren Verlauf die Lamellenbremse (81) in Bremseingriff kommt.

9. Antriebsvorrichtung nach Anspruch 8, **dadurch gekennzeichnet, dass** bei ungleichmäßiger Bremsung an der Gegendruck-Fahrzeugseite das Lamellenbremsen-Lüftspiel (ss) aufgrund der Druckstab-Verstellung reduziert ist, und dass insbesondere das Lamellenbremsen-Lüftspiel (s_{B}) kleiner als das Lamellenkupplungs-Lüftspiel (s_{K}) bemessen ist, so dass eine Betätigung der Lamellenkupplung (19) an der gegenüberliegenden Fahrzeugseite ausgeschlossen ist.

## Claims

1. Drive device for a vehicle axle of a two-track vehicle, which has an axle differential (39) whose input side is connected in terms of drive to an electric machine (EM) and whose output sides output drive to flange shafts (23) leading to the two vehicle wheels (HL, HR), wherein the vehicle axle has on each vehicle side a respective superposition gearing (45) with a multiplate clutch (19), by means of which superposition gearing the electric machine (EM) is able to be connected directly to the vehicle-wheel flange shaft (23) while bypassing the axle differential (39), wherein the multiplate clutches (19) are able to be controlled by a control unit (8), specifically in particular for a redistribution of braking torque between the vehicle sides in the recuperation mode of the electric machine (EM),
**characterized in that**,
on each vehicle side, the multiplate clutch (19) is assigned a multiplate brake (81) acting as a vehicle-wheel brake, by means of which vehicle braking operations are able to be carried out as an alternative or in addition to the multiplate clutch (19).

2. Drive device according to Claim 1, **characterized in that**, on each vehicle side, both the multiplate clutch (19) and the multiplate brake (81) are able to be actuated via a common hydraulic cylinder (15) which is connected via exactly one hydraulic line (7) to the control unit (8), and **in that** in particular the hydraulic cylinder (15), when controlled by the control unit (8), builds up a hydraulic pressure by way of which a pressure element, in particular an annular piston (57), presses against both a plate pack of the multiplate clutch (19) and a plate pack of the multiplate brake (81).

3. Drive device according to Claim 1 or 2, **characterized in that** the pressure element (57), starting from the non-actuated state, presses the plate pack of the multiplate clutch (19) against an axial stop (87) over a clearance (s_{K}) until the kiss point is reached, and **in that** in particular the clearance (s_{K}) does not vary according to the braking situation, that is to say with uniform braking or with non-uniform braking on each vehicle side.

4. Drive device according to Claim 3, **characterized in that** the pressure element (57), starting from the non-actuated state, presses the plate pack of the multiplate brake (81) against an axial stop (89) over a clearance (ss) until the kiss point is reached, and **in that** in particular the clearance (ss) varies according to the braking situation, specifically in particular by way of axial adjustment of the axial stop (89).

5. Drive device according to Claim 4, **characterized in that**, with uniform braking on both vehicle sides, the multiplate-brake clearance (ss) is smaller in size than the multiplate-clutch clearance (s_{K}), so that, in particular during the closing stroke of the pressure element (57), firstly the multiplate brake (81) enters into braking engagement and only over the further course the multiplate clutch (19) enters into braking engagement.

6. Drive device according to Claim 4 or 5, **characterized in that**, with non-uniform braking on both vehicle sides, the multiplate-brake clearance (ss) is larger in size than the multiplate-clutch clearance (s_{K}), so that, during the closing stroke of the pressure element (57), firstly the multiplate clutch (19) of the vehicle side controlled with a higher braking pressure by the control unit (8) enters into braking engagement and only over the further course the multiplate brake (81) enters into braking engagement.

7. Drive device according to one of Claims 4 to 6, **characterized in that** the axially adjustable axial stop of the multiplate brake (81) is a pressure bar (89), and **in that** the pressure bar (89) acts as an axially adjustable axial stop on both vehicle sides, this being axially adjustable between movement stops (91) by a pressure-bar axial travel (Δs).

8. Drive device according to Claim 7, **characterized in that**, with non-uniform braking, on the vehicle side to which a higher braking pressure is applied, during the closing stroke of the pressure element (57), the plate pack of the multiplate brake (81) adjusts the pressure bar (89) by the pressure-bar axial travel (Δs) towards the counterpressure vehicle side, so that the available multiplate-brake clearance (s_{B}) is increased by the pressure-bar axial travel (Δs), specifically in comparison with the braking situation of uniform braking, and **in that** in particular the multiplate-brake clearance (ss) is larger in size than the multiplate-clutch clearance (s_{K}) by an additional dimension (a), so that, in particular during the closing stroke of the pressure element (57), firstly the multiplate clutch (19) enters into braking engagement and only over the further course the multiplate brake (81) enters into braking engagement.

9. Drive device according to Claim 8, **characterized in that**, with non-uniform braking, on the counterpressure vehicle side, the multiplate-brake clearance (ss) is reduced due to the pressure-bar adjustment, and that in particular the multiplate-brake clearance (ss) is smaller in size than the multiplate-clutch clearance (s_{K}), so that actuation of the multiplate clutch (19) on the opposite vehicle side is ruled out.

## Revendications

1. Dispositif d'entraînement pour un essieu de véhicule d'un véhicule à deux voies, qui présente un différentiel d'essieu (39), dont le côté d'entrée est relié en entraînement à une machine électrique (EM) et dont les côtés de sortie entraînent des arbres à bride (23) menant aux deux roues de véhicule (HL, HR), l'essieu de véhicule présentant de chaque côté du véhicule respectivement un engrenage de superposition (45) avec un embrayage à disques (19), au moyen duquel la machine électrique (EM) peut être reliée directement à l'arbre à bride (23) de la roue du véhicule en contournant le différentiel d'essieu (39), les embrayages à disques (19) pouvant être commandés par une unité de commande (8), et ce notamment pour une redistribution du couple de freinage entre les côtés du véhicule qui a lieu dans le mode de fonctionnement de récupération de la machine électrique (EM), **caractérisé en ce qu'**un frein à disques (81) agissant en tant que frein de roue de véhicule est associé à l'embrayage à disques (19) de chaque côté du véhicule, au moyen duquel des freinages de véhicule peuvent être effectués en alternative ou en plus de l'embrayage à disques (19).

2. Dispositif d'entraînement selon la revendication 1, **caractérisé en ce que**, de chaque côté du véhicule, aussi bien l'embrayage à disques (19) que le frein à disques (81) peuvent être actionnés par un vérin hydraulique commun (15) qui est relié à l'unité de commande (8) par l'intermédiaire d'exactement une conduite hydraulique (7), et **en ce que**, notamment, le vérin hydraulique (15), lorsqu'il est commandé par l'unité de commande (8), établit une pression hydraulique avec laquelle un élément de pression, notamment un piston annulaire (57), appuie aussi bien contre un paquet de disques de l'embrayage à disques (19) que contre un paquet de disques du frein à disques (81).

3. Dispositif d'entraînement selon la revendication 1 ou 2, **caractérisé en ce que** l'élément de pression (57), en partant de l'état non actionné, presse le paquet de disques de l'embrayage à disques (19) contre une butée axiale (87) par l'intermédiaire d'un jeu d'aération (sK) jusqu'à ce que le point de contact soit atteint, et **en ce que** notamment le jeu d'aération (sK) est invariable indépendamment du cas de freinage, c'est-à-dire en cas de freinage uniforme de chaque côté du véhicule ou en cas de freinage non uniforme.

4. Dispositif d'entraînement selon la revendication 3, **caractérisé en ce que** l'élément de pression (57), en partant de l'état non actionné, presse le paquet de disques du frein à disques (81) contre une butée axiale (89) par l'intermédiaire d'un jeu d'aération (sB) jusqu'à atteindre le point de contact, et **en ce que** notamment le jeu d'aération (sB) varie en fonction du cas de freinage, et ce notamment par déplacement axial de la butée axiale (89).

5. Dispositif d'entraînement selon la revendication 4, **caractérisé en ce qu'**en cas de freinage uniforme des deux côtés du véhicule, le jeu d'aération (sB) du frein à disques est dimensionné plus petit que le jeu d'aération (sK) de l'embrayage à disques, de telle sorte que, notamment lors de la course de fermeture de l'élément de pression (57), le frein à disques (81) vient d'abord en prise de freinage et l'embrayage à disques (19) ne vient en prise de freinage que par la suite.

6. Dispositif d'entraînement selon la revendication 4 ou 5, **caractérisé en ce qu'**en cas d'un freinage non uniforme des deux côtés du véhicule, le jeu d'aération (sB) du frein à disques est dimensionné plus grand que le jeu d'aération (sK) de l'embrayage à disques, de telle sorte que, lors de la course de fermeture de l'élément de pression (57), l'embrayage à disques (19) du côté du véhicule commandé par l'unité de commande (8) avec une pression de freinage plus élevée vient d'abord en prise de freinage et le frein à disques (81) ne vient en prise de freinage que par la suite.

7. Dispositif d'entraînement selon l'une quelconque des revendications 4 à 6, **caractérisé en ce que** la butée axiale réglable axialement du frein à disques (81) est une tige de pression (89), et **en ce que** la tige de pression (89) agit des deux côtés du véhicule en tant que butée axiale réglable axialement, qui peut être déplacée axialement entre des butées de mouvement (91) d'une course axiale (Δs) de la tige de pression.

8. Dispositif d'entraînement selon la revendication 7, **caractérisé en ce qu'**en cas de freinage non uniforme du côté du véhicule soumis à une pression de freinage plus élevée, lors de la course de fermeture de l'élément de pression (57), le paquet de disques du frein à disques (81) déplace la tige de pression (89) de la course axiale (Δs) de tige de pression en direction du côté du véhicule soumis à une contre-pression, de telle sorte que le jeu d'aération (sB) du frein à disques disponible augmente de la course axiale (Δs) de la tige de pression, et ce en comparaison du cas de freinage avec freinage uniforme, et **en ce que**, notamment, le jeu d'aération (sB) du frein à disques est dimensionné plus grand d'une mesure supplémentaire (a) que le jeu d'aération (sK) de l'embrayage à disques, de telle sorte que, notamment lors de la course de fermeture de l'élément de pression (57), l'embrayage à disques (19) vient d'abord en prise de freinage et le frein à disques (81) ne vient en prise de freinage que par la suite.

9. Dispositif d'entraînement selon la revendication 8, **caractérisé en ce qu'**en cas de freinage non uniforme du côté du véhicule soumis à une contre-pression, le jeu d'aération (sB) du frein à disques est réduit en raison du réglage de la tige de pression, et **en ce que**, notamment, le jeu d'aération (sB) du frein à disques est dimensionné plus petit que le jeu d'aération (sK) de l'embrayage à disques, de telle sorte qu'un actionnement de l'embrayage à disques (19) est exclu du côté opposé du véhicule.
